Europäisches Patentamt

European Patent Office

Office européen des brevets

(19)

(11) Veröffentlichungsnummer: **0 158 910 B1**

(12) **EUROPÄISCHE PATENTSCHRIFT**

(45) Veröffentlichungstag der Patentschrift: **11.09.91**

(51) Int. Cl.⁵: **C23F 1/46, C25C 1/12**

(21) Anmeldenummer: **85103871.1**

(22) Anmeldetag: **30.03.85**

(54) **Verfahren zur Rückgewinnung von Kupfer aus einer ammoniakalischen Kupfer-Ätzlösung und Rekonditionierung derselben.**

(30) Priorität: **16.04.84 US 600888**

(43) Veröffentlichungstag der Anmeldung:
**23.10.85 Patentblatt 85/43**

(45) Bekanntmachung des Hinweises auf die
Patenterteilung:
**11.09.91 Patentblatt 91/37**

(84) Benannte Vertragsstaaten:
**DE FR GB NL**

(56) Entgegenhaltungen:
**EP-A- 0 018 848**
**EP-A- 0 046 522**
**EP-A- 0 117 068**
**FR-A- 2 179 267**
**US-A- 3 705 061**

**TRANSACTIONS OF THE INSTITUTE OF ME-
TAL FINISHING, Band 57, Nr. 2, Februar 1979,
Seiten 73-76, London, GB; M.R. HILLIS: "The
electrolytic regeneration of spent ferric
chloride etchant"**

**TRANSACTIONS OF THE INSTITUTE OF ME-
TAL FINISHING, Band 62, Nr. 1, 1984, Seiten
21-24, London, GB; M.R. HILLIS: "The applica-**

tion of the Capenhurst electrolytic etchant
regeneration (CEER) process to cupric chloride and ammoniacal etchants"

(73) Patentinhaber: **Lancy International, Inc.**
**525 W. New Castle Street**
**Zelienople Pennsylvania 16063(US)**

(72) Erfinder: **Warheit, Kevin E.**
**45 West Pinehurst Drive**
**Butler Pennsylvania 16001(US)**

(74) Vertreter: **Becker, Maria, Dipl.-Phys.**
**Auf dem Haigst 29**
**W-7000 Stuttgart 70(DE)**

## Beschreibung

Die Erfindung betrifft ein Verfahren zur Rückgewinnung von Kupfer aus einer ammoniakalischen Kupfer-Ätzlösung und Rekonditionierung derselben, damit die rekonditionierte Kupfer-Ätzlösung in dem Ätzprozess wiederverwendet werden kann, unter Verwendung einer Elektrolysezelle mit einer Kathoden- und Anodenabteile voneinander trennenden kationendurchlässigen Membrane.

Ammoniakalische Kupfer-Ätzlösungen fallen z.B. bei der Herstellung von gedruckten Schaltungen bzw. Leiterplatten an, bei der auf ein nichtleitendes, plattenförmiges oder flexibles Material ein dünner Kupferfilm laminiert wird. Die Kupferoberfläche wird danach mit einer lichtempfindlichen Schicht überzogen, die später an den nicht belichteten Stellen leicht entfernt werden kann. Nach der Entfernung der unbelichteten Fotoschicht mit dem Freiwerden der konstruktiv festgelegten Leiterbahnen können diese zum Schutz gegen den Angriff eines Ätzmittels mit einer galvanisch abgeschiedenen Schicht versehen werden, die aus einer Zinn-Blei-Legierung, Zinn oder Gold besteht und gute elektrische Eigenschaften besitzt. Damit kann die nichtgalvanisierte Kupferoberfläche weggeätzt werden, wodurch die Leiterbahnen freigelegt werden.

Um die ungewünschten Kupferzwischenräume zu entfernen, werden verschiedene chemische Ätzlösungen eingesetzt, wie z.B. Lösungen mit Kupferchlorid und Eisenchlorid, Schwefelsäure mit Wasserstoffperoxyd, Ammoniumpersulfat und andere, wobei sich das gattungsgemässe Verfahren auf die Regenerierung oder Rekonditionierung alkalischer, ammoniakhaltiger Lösungen bezieht.

Eine ammoniakalische Ätzlösung hat den Vorteil, dass sie weder die Zinn-Blei-, noch die Zinnüberzüge, die zum Schutze der Kupfer-Leiterbahnen aufgebracht werden, angreift. Als wichtigsten Vorteil der ammoniakalischen Ätzlösungen kann man im Hinblick auf die Leiterplatten-Produktion den hohen Gehalt an gelöstem Kupfer nennen, den die Lösung aufzunehmen vermag und den relativ weiten zulässigen Konzentrationsbereich für gelöstes Kupfer, in dem noch gute Ergebnisse erzielt werden.

Das Ammoniumion wirkt als Komplexbildner und verhindert die Ausfällung des Kupfers bei dem in der Ätzlösung eingestellten pH-Wert. Das anorganische $Cu^{++}$-Ion wirkt als Oxydant zum Lösen des metallischen Kupfers. Die verschiedenen alkalischen Ätzsysteme enthalten Kupfer-Nitrate, -Chlorite oder -Chloride in einem Ammoniumkomplex. Das Regenerierungsverfahren der vorliegenden Erfindung soll dahingehend entwickelt werden, dass es für alle diese Zusammensetzungen wirtschaftlich einsetzbar ist. Bei Abweichungen vom Chloridtyp muss das Anion jedoch durch ein anderes brauchbares ersetzt werden.

Zum besseren Verständnis der Problematik bei der Regenerierung und Wiederherstellung einer gebrauchten Ätzlösung sollen die physikalisch-chemischen Reaktionen eines solchen Systems aufgezeigt werden.

Zweiwertige Kupferionen oxidieren das metallische Kupfer der Kupferschicht nach der Raktion:

1. $Cu^0 + Cu^{++} \Rightarrow 2\ Cu^{+}$

Das einwertige Kupferion wird durch den Luftsauerstoff während eines Sprüh-Prozesses oxidiert:

2. $2\ Cu^{+} + O_2 \Rightarrow 2\ Cu^{++}$

Durch den ammoniakalischen Komplex bleibt diese Reaktion praktisch unbeeinflusst:

3. $Cu^0 + CuCl_2 \times 4\ NH_3 \Rightarrow 2\ CuCl \times 2\ NH_3$

4. $2\ CuCl \times 2\ NH_3 + 2\ Cl + O_2 + 4\ NH_3 \Rightarrow 2\ CuCl_2 \times 4\ NH_3$

Wie aus den Reaktionen 3 und 4 hervorgeht, reichert sich die Ätzlösung mit Kupferionen an, gleichzeitig werden freies Chlorid und Ammoniak verbraucht. Bei der Produktion von Leiterplatten kommt es daher in der Ätzlösung zu einer Konzentrationsverschiebung. Durch Zugabe von Ammoniumchlorid als Ergänzungschemikalie kann das Gleichgewicht wieder hergestellt werden, doch die ständige Zunahme des Kupfergehaltes beeinflusst die Ätzgeschwindigkeit ab einer gewissen Konzentration negativ, wodurch es in automatischen Durchlaufanlagen zu Qualitätsverschlechterungen kommt.

In der allgemeinen Praxis verhindert man dieses Problem dadurch, dass man kontinuierlich einen kleinen Teilstrom der Ätzlösung verwirft. In grossen Produktionsanlagen wird die Dichte der Lösung, die mit dem Kupfergehalt zunimmt, automatisch überwacht. Bei Überschreiten der zulässigen Dichte wird ein definiertes Volumen der Ätzlösung verworfen und durch ein entsprechendes Volumen einer Ergänzungslösung mit Ammoniumchlorid und freiem Ammoniak aufgefüllt.

Bei einem idealen Verfahren muss das gelöste Kupfer mit der Geschwindigkeit aus der Ätzlösung entfernt werden, mit der es durch den Ätzprozess in die Lösung gelangt. Die bisher bekannten Verfahren konnten dies aber weder wirtschaftlich, noch problemlos erreichen, so dass die verbrauchte Ätzlösung gewöhnlich als Abfall betrachtet werden musste und nur für einen Bruchteil seines Kupferwertes verkauft werden konnte. Ein typisches Preisangebot für eine verbrauchte Ätzlösung mit 180 g/l Kupfer liegt bei 0,05 US-Dollar pro Gallone (3,785 Liter), wobei andererseits der Kupfergehalt einen Marktwert von 1,10 US-Dollar darstellt. Von diesem mageren Erlös müssen noch Transport- und Nebenkosten abgezogen werden, die abhängig von der Entfernung zur nächsten Verarbeitungsstelle sind. Einen weiteren, bedeutenden Verlustfaktor bei dieser Arbeitsweise stellt das nicht zurückgewonnene Ammoniumchlorid dar, welches, unabhängig von dem verlorenen Kupfer, nach den Marktpreisen für Ammoniumchloridlösung einem Wert von 0,87 US-Dollar pro Gallone entspricht.

Die Spülwässer nach dem Ätzprozess enthalten ebenfalls beträchtliche Mengen an Kupfer und Chemikalien, da die Verschleppmenge mit den Leiterplatten aufgrund der hohen Dichte der Lösung (1,25 $g/cm^3$) wesentlich grösser ist als bei herkömmlichen Oberflächenbehandlungsprozessen.

Eine Rückgewinnung aus den verdünnten Spülwässern ist unwirtschaftlich, so lange die Prozesslösung selbst aufgrund fehlender Rückgewinnungsverfahren verworfen werden muss. Man rechnet mit einem Verlust von ca. 50 Liter Ätzlösung pro 100 $m^2$ einseitiger Leiterplatten. Ein erfolgreiches Rückgewinnungsverfahren würde in diesem Zusammenhang die Industrie auch von den schwierigen Abwasserproblemen befreien. Kupfer und Ammoniak wirken toxisch auf Lebewesen im Wasser. Im Hinblick auf ihre Konzentrationen wirken sie auch auf die Bakterien der biologischen Kläranlage sowie die Gewässer, in die das behandelte Abwasser gelangt, toxisch.

Die oben angeführte Problematik ist ausreichend bekannt, und es wurden daher auch bereits verschiedene Vorschläge für die Metallrückgewinnung und die Regenerierung der Ätzlösung veröffentlicht.

So kann die Metallrückgewinnung allein u.a. durch Änderungen in der chemischen Zusammensetzung erfolgen, z.B. durch Austreiben des Ammoniaks mit nachfolgender vollkommener Ausfällung des Kupfers in Form von Kupferhydroxid, aus dem das Kupfer unter Verwendung einer schwefelsauren Lösung elektrolytisch abgeschieden werden kann. Unter der Aufgabe, aus der Prozesslösung eine kontrollierbare Kupfermenge zu entfernen und die Lösung in das Ätzbad zurückzuführen, erkennt man die damit verbundenen Schwierigkeiten. Folglich wird nach vorliegenden Berichten die Zielsetzung in sehr wenigen Fällen zufriedenstellend erreicht. B. Whalen diskutiert diese Problematik eingehend (siehe Seiten 20 und 21 des Berichtes mit dem Titel "Closing the Loop on Etchants" aus dem Journal "Printed Circuit Fabrication").

Das US-Patent No. 4,083,758 beschreibt einen Prozess, bei dem die Lösung mit einem flüssigen Ionenaustauscher in einem organischen Lösungsmittel in Kontakt gebracht wird. Nach gründlicher Durchmischung wird das Kupfer aus der wässrigen Phase in das organische Lösungsmittel mit dem flüssigen Ionenaustauscher überführt. Nach der Trennung der beiden Phasen wird das Lösungsmittel mit Wasser ausgewaschen und danach mit einer Säurelösung (z.B. Schwefelsäure) in Kontakt gebracht, die das Kupfer von dem Ionenaustauscher abtrennt und aufnimmt, so dass das Lösungsmittel nach dem Auswaschen mit Wasser wieder benutzt werden kann. Das Kupfer kann aus der Säurelösung elektrolytisch abgeschieden werden, und nach der Beschreibung kann die entkupferte Ätzlösung nach Filtration über Aktivkohle wieder in den Ätzprozess zurückgeführt werden. Jeder Verfahrensingenieur erkennt aus der Verfahrensbeschreibung den komplexen Anlagenaufwand zur Durchführung dieses Prozesses sowie den Arbeitsaufwand für Überwachung und Instandhaltung. Durch diese Faktoren lässt sich dieses Verfahren in kleineren Produktionsstätten, wie der Leiterplattenherstellung, nicht wirtschaftlich einsetzen.

US-Patent No. 4,303,704 beschreibt die Entfernung des Kupfers mit einem speziellen Ionenaustauscherharz. Diese Methode ist im wesentlichen für die Spülwässer anwendbar, da die Kupferkonzentration in der verbrauchten Ätzlösung sehr hoch ist und damit grosse Harz-Volumina erfordert. Die Kosten für die Regenerationschemikalien lassen das Verfahren für eine Regenerierung der Ätzlösung daher unwirtschaftlich erscheinen.

US-Patent No. 4,280,887 beansprucht die Regenerierung der ammoniakalischen Ätzlösung durch Entfernung des Kupfers durch Ladungsaustausch an eingetauchten Metallelektroden (Aluminium oder Eisen) in die verbrauchte Ätzlösung. Durch das Auflösen des Aluminiums wird das Kupfer in Form von metallischem Pulver abgeschieden, wobei das Aluminium das Kupfer als gelöstes Salz ersetzt.

Die elektrochemische Reaktion wird beschleunigt, indem man zwei ungleiche Metalle mit weit auseinanderliegenden Eigenpotentialen in der Spannungsreihe miteinander verbindet. Das Aluminium löst sich durch die anodische Wirkung auf. Es fällt als Hydroxid aus und vermischt sich mit dem abfallenden Kupferpulver, so dass eine grosse Menge an Schlamm produziert wird. Es ist fraglich, ob das rückgewonnene Kupfer einen Wert hat, da es mit dem Aluminiumhydroxid vermischt ist und die Reste der ammoniakalischen Ätzlösung herausgewaschen werden müssen. Es ist ausserdem fraglich, ob die so regenerierte Ätzlösung wieder erfolgreich in dem Ätzprozess eingesetzt werden kann, da das gelöste Aluminium nicht restlos ausfällt und zu einer Verunreinigung der Kupfer-Leiterbahnen führen kann. Soweit bekannt ist, hat dieses Verfahren in der Industrie keine Anwendung gefunden. Auch hat B. Whalen in ihrem Bericht dieses Verfahren nicht unter den in der Praxis bekannten Verfahren aufgeführt.

Soweit bekannt, hat das British Electric Council Research Center ein anderes Verfahren entwickelt. In seinem Bericht "The Electrolytic Regeneration of Spent Ferric Choride Etchant" (Seiten 73 bis 76) beschreibt Hillis einen elektrolytischen Rückgewinnungsprozess, der ursprünglich für die Regenerierung einer sauren Kupferchlorid-Ätzlösung entwickelt wurde, bei dem durch elektrolytische Abscheidung eine geringe Kupfermenge kontinuierlich entfernt wird. Das wesentliche Merkmal dieses Verfahrens stellt die Elektrolysezelle dar, die durch eine Kationen-Membrane in einen Kathoden- und einen Anodenbereich geteilt wird. Die Ätzlösung wird durch das Anodenabteil gepumpt, wobei Kupferkationen durch die Membrane wandern und an der Kathode als loses, nichthaftendes Kupferpulver abgeschieden werden.

Die Zelle wird periodisch entleert und das angesammelte Kupferpulver als Nebenprodukt entfernt. Im Juni 1981, als der veröffentlichte Bericht vorgetragen wurde, deutete man an, dass sich das Verfahren für die alkalische Ätzlösung noch in einem Entwicklungsstadium befände, das Verfahren aber offensichtlich den gestellten Forderungen der Industrie gerecht würde. Die Problematik bei der Anwendung auf ammoniakalische Lösungen liegt wohl in dem gleichzeitigen Transport von Kupferionen und Ammoniumionen durch die Kationenmembrane. Zweifellos wird dadurch der Transport von Kupferionen verlangsamt. Die Kupferpulverabscheidung und die anwendbare Stromdichte sind begrenzt. Mit dem verringerten Transport von Kupferionen ist gleichzeitig ein Verlust von Ammoniumionen verbunden.

Der Verlust von Ammoniumionen bedeutet erstens eine Veränderung der chemischen Zusammensetzung der Ätzlösung, wodurch häufige analytische Überwachung und Korrekturen erforderlich sind. Zweitens ist damit ein Chemikalienverlust verbunden. Die Bildung von Kupferpulver ist keine wirtschaftliche Methode zur Rückgewinnung des Kupfers. Die Praxis zeigt, dass Kupferpulver nur einen niedrigen Schrottwert besitzt. Aufgrund der grossen Oberfläche wird ein grosser Anteil des Kupfers oxidiert. Kupferpulver aus abgesetztem Schlamm aus einer Elektrolysezelle erfordert vor der Verwendung im Schmelzofen verschiedene Waschvorgänge, um die Salze aus dem Elektrolyten zu entfernen. Nach vorliegenden Erfahrungen ist die Rückgewinnung des Metalles für die oberflächenbehandelnde Industrie nur dann wirtschaftlich sinnvoll, wenn das Metall in reiner Form und direkt verwertbar zurückgewonnen wird, z.B. als Folie oder Platte mit hohem Reinheitsgrad, damit diese als Anodenmaterial bei der Verkupferung wieder eingesetzt werden kann oder den höchstmöglichen Preis für das Kupfer erzielt.

Insbesondere von dem zuletzt genannten Verfahren ausgehend, liegt der Erfindung folgender Aufgabenkomplex zugrunde.

a) Entwicklung eines Verfahrens zur Beherrschung des anscheinend unlösbaren Problems einer kontrollierten, direkten Abscheidung und Rückgewinnung des Kupfers in fester, reiner Form aus ammoniakalischen Ätzlösungen mit hohem Kupfergehalt.

b) Rückgewinnung des Kupfers in sehr reiner Form als feste Kupferplatte unter Erhaltung der wichtigen Chemikalien in der Ätzlösung sowie Vermeidung metallischer Verbindungen und Schlamms als Verunreinigungen der Ätzlösung.

c) Entwicklung eines Verfahrens zur Rekonditionierung einer erschöpften Ätzlösung unter Erhaltung des Ammoniumgehaltes, wobei das Ammoniak weder durch Verdampfung, noch auf andere Weise verloren geht, dabei der Kupfergehalt verringert und das Kupfer in reiner, metallischer Form zurückgewonnen wird und die regenerierte Lösung in den Ätzprozess zurückgeführt wird, so dass ein kontinuierlich und äusserst wirtschaftlich arbeitendes Verfahren daraus resultiert.

Gelöst wird dieser Aufgabenkomplex grundsätzlich bereits durch die Ausbildung des gattungsgemässen Verfahrens nach den kennzeichnenden Merkmalen des Anspruchs 1.

Danach wird u.a. in einer Elektrolysezelle mit unlöslicher Metallanode, wie z.B. Blei, reines Kupfer in Plattenform auf Kathoden aus nichtrostendem Stahl, Stahl, Kupfer oder Eisen abgeschieden, wobei Kathoden- und Anodenabteil durch eine dazwischenliegende Katiodenaustauscher-Membrane getrennt werden, die den Obergang von Anionen in das Anodenabteil verhindert. Von dem Ätzbad wird soviel Ätzlösung in das Kathodenabteil überführt, wie zur Aufrechterhaltung der gewünschten Kupferkonzentration in dem Ätzbad erforderlich ist. In dem Kathodenabteil wird der Kupfergehalt durch die kathodische Abscheidung auf 80 g/l oder weniger verringert.

Zusätzliche Verbesserungen, vor allem bezüglich der Aufgabenteile b) und c), sowie zweckmässige Ausgestaltungen sind Gegenstand der Unteransprüche.

So wird danach z.B. ein Verlust von Ammoniumionen aus der Ätzlösung dadurch verhindert, dass dem Anolyten Ammoniumsalz, wie z.B. Ammoniumsulfat, -chlorid, -acetat, -sulfamat, oder -phosphat zugesetzt wird, um eine Ammoniumkonzentration im Bereich von 1,5 bis 20 g/l bei einem pH-Wert im Bereich von 4,0 bis 10,0 aufrechtzuerhalten. Um optimale Ergebnisse zu erzielen, muss der pH-Wert der aufbereiteten, vom Kathodenabteil ablaufenden kupferarmen Lösung auf einen pH-Wert über 8,0 erhöht werden, bevor die Lösung in dem Kupfer-Ätzbad wiederverwendet wird. Vor der Aufkonzentrierung des Spülwassers durch Verdunstungs- oder Verdampfungsverfahren ist das Spülwasser auf einen pH-Wert unter 8,4 abzusenken, damit die Ammoniakverluste während der Verdampfung so gering wie möglich sind.

Ein wesentlicher Vorteil des erfindungsgemässen Verfahrens liegt darin, dass das Kupfer schnell aus der Ätzlösung in fester Form als Metallplatte auf einer plattenförmigen Kathode abgeschieden und dadurch später gut abgezogen werden kann.

Nach den bisher bekannten Verfahren war es bei Einsatz einer Kationen-Membrane in eine Elektrolytzelle nur möglich, das Kupfer aus der Ätzlösung in den Katholyten zu überführen und daraus in Pulverform zurückzugewinnen. Wie hierzu bereits weiter oben erläutert, bedeutet die pulverförmige Abscheidung jedoch einen Verlust im Wiederverkaufswert oder in den Möglichkeiten der weiteren Verwendung. In verschiedenen, der Erfindung vorausgegangenen Experimenten wurde festgestellt, dass die elektrolytische Abscheidung des Kupfers aus der Ätzlösung viel schneller erfolgt als der Transport von Kupferionen durch die Membrane, wobei der Katholyt an Metallionen verarmt. Dadurch wird die Abscheidung eines festen, zusammenhängenden Metallniederschlages unmöglich. Ein elektrochemischer Prozess, wie in US-Patent No. 4,280,887 beschrieben, ist daher für die vorliegende Aufgabenstellung völlig ungeeignet.

Die meisten ammoniakalischen Ätzlösungen enthalten Chloride. Dadurch ergab sich das Problem, eine beständige, unlösliche Anode zu finden, die dem gebildeten Chlor widersteht. Derartige Anoden, wenn überhaupt über einen längeren Zeitraum beständig, bestehen aus sehr teueren Materialien. Dieses Problem konnte durch die Abtrennung des Anodenbereiches, des Anolyten, von der chloridhaltigen Ätzlösung durch eine entsprechende Membrane erreicht werden. Der Vorteil liegt darin, dass ein chloridfreier Anolyt eingesetzt werden kann, so dass Chlorbildung und Anodenangriff vermieden werden. Ausserdem wurde erkannt, dass anodisch gebildetes Chlor mit dem Ammoniak zu Chloraminen reagiert, wodurch die Arbeitsweise der Ätzlösung negativ beeinträchtigt wird.

Die einzig erfolgreiche Lösung dieses Problems besteht in der Anwendung eines kathodischen Potentials, welches einerseits dem Korrosionsstrom entgegenwirkt und andererseits die Rücklösung des Kupfers verhindert. Wird das Potential der Zelle durch eine äussere Stromquelle überschritten, so kommt es zur Metallabscheidung, jedoch mit relativ geringer Stromausbeute.

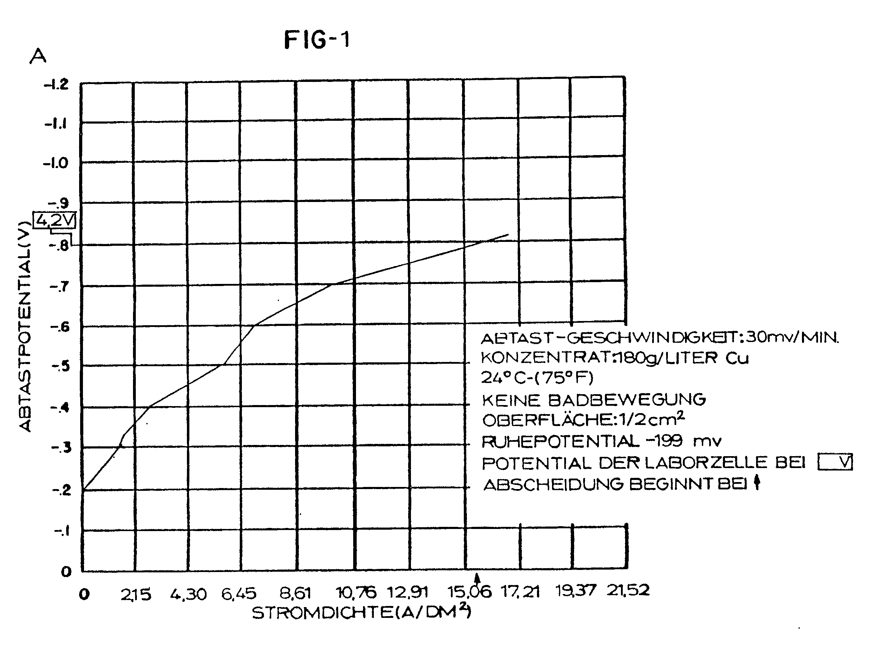

Die in Vorbereitung der Erfindung durchgeführten Untersuchungen haben ergeben, dass es einen kritischen Zusammenhang zwischen der Kupferkonzentration der Lösung und der Höhe des angelegten Stromes zur Kompensation des Gegenstromes der Zelle und zur effektiven Kupferabscheidung, ohne Bildung von Kupferpulver, gibt. Diese Zusammenhänge werden in den nachfolgend wiedergegebenen Experimenten 1 bis 5 sowie den zugehörigen Diagrammen in den Fig. 1 bis 5 erklärt.

Dabei stellen die Diagramme in den Fig. 1 bis 5 Stromdichte-Potential-Kurven bei der Kupferabscheidung aus einer gebrauchten Ätzlösung unter kontinuierlicher Abtastung des Potentialbereichs dar.

Zu den Diagrammen in den Fig. 1 bis 5 ist im einzelnen folgendes zu sagen:

Fig. 1: Hier liegt eine Kupferkonzentration von 180 g/l in der Lösung vor, die Temperatur beträgt 24° C, das Ruhepotential beträgt 199 mV.

Fig. 2: Die Kupferkonzentration beträgt 30 g/l bei 24° C und einem Ruhepotential von 373 mV.

Fig. 3: Der Kupfergehalt liegt bei 30 g/l, die Temperatur ist auf 54° C erhöht, und das Ruhepotential beträgt 375 mV.

Fig. 4: Die Kupferkonzentration liegt bei 5 g/l, die Temperatur beträgt 28° C und das Ruhepotential 412 mV.

Fig. 5: Es liegt eine Kupferkonzentration von 5 g/l vor, die Temperatur beträgt 54° C, und das Ruhepotential misst 404 mV.

Kurz zusammengefasst kann man sagen, dass ein brauchbares Verfahren höhere kathodische Stromdichten erfordert, um optimale Ergebnisse in Bezug auf Stromausbeute, Energieverbrauch und Abbau der Kupferkonzentration in dem Kathodenabteil zu erreichen. Der Strom muss so kontrolliert werden, dass ein Korrosionsangriff auf den Kathodenniederschlag vermieden wird und eine Abscheidung des Kupfers gewährleistet ist.

Die Versuche wurden durchgeführt mit einer kommerziellen Ätzlösung, die für ausgezeichnete Ätzgeschwindigkeit für Kupfer bekannt ist, wobei vorausgesetzt wurde, dass die mit einer in der Industrie eingesetzten Hochleistungs-Ätzlösung gefundenen Ergebnisse gleichwohl auf alle anderen kommerziellen Ätzlösungen auf dieser Basis angewendet werden können. Die benutzte Ätzlösung trug die Bezeichnung "Ultra-Etch-50" und ist ein Produkt der Firma MacDermid, Inc. in Waterbury, Connecticut. Diese Lösung hat im Arbeitsbereich die folgende Zusammensetzung: 160 - 200 g/l Kupfer, 130 - 160 g/l $NH_4^+$ und 110 - 150 g/l $Cl^-$ bei einem pH-Wert von 8,4, der durch Zugabe von NH4OH eingestellt wird. Bei einer Temperatur von 130° F (54° C) hat diese Ätzlösung angeblich eine Ätzrate für Kupfer auf Leiterplatten von 0,003" (0,076 mm) pro Minute.

Für die Beurteilung der Wirtschaftlichkeit ist zu erwähnen, dass 1 Gallone (3,785 Liter) der Ergänzungslösung mit 168,5 g/l NH4Cl bei einer Abnahme von 2.000 - 3.000 Gallonen (7.500 - 11.400 Liter) zur Zeit 0,87 Dollar kostet. Der Wert des Kupfergehaltes der verbrauchten Ätzlösung beträgt zur Zeit ungefähr 1,10 Dollar pro Gallone.

Nachfolgend eine Reihe von Beispielen der Versuche, die durchgeführt werden mussten, um zu der erfindungsgemässen Lösung für das anstehende Problem zu kommen.

Beispiel 1

In dieser Versuchsreihe wurde eine Ätzlösung mit 203 g/l Kupfer in einer Elektrolysezelle elektrolysiert, wobei Anodenabteil und Kathodenabteil entsprechend der Theorie, von der die Erfindung ausgeht, durch eine kationendurchlässige Membrane vom Typ "Nafion" (Produktname der Firma DuPont) gegeneinander getrennt waren. Als Anolyt diente eine Natriumsulfatlösung mit 16 g/l bei einem pH-Wert von 6,5 bis 7,6. Als Kathode diente ein Stahlblech, die Anode dieser Elektrodenanordnung bestand aus Blei.

Als Katholyt diente die vollkommen erschöpfte Ätzlösung mit einem Kupfergehalt von 203 g/l. Die anderen Chemikalien der Ätzlösung lagen in den für den Arbeitsbereich angegebenen Konzentrationen vor. Die Versuche umfassten die folgenden Parameter: Keine Bewegung oder schwache Bewegung; Elektrolyse bei Raumtemperatur (20-22° C) und bei erhöhten Temperaturen (54° C); verschiedene Stromdichten für die Kupferabscheidung, beginnend bei mittleren Stromdichten und nachfolgend steigernd.

| Cu-Gehalt g/l | Bewegung | Temp. °C (°F) | Stromd. A/dm² (A/sq.ft.) | Energie-bedarf kW/kg | Bemerkungen zum Niederschlag |
|---|---|---|---|---|---|
| 203 | keine | 22(72) | 17,20(160) | 36,0 | 1, 2, 3 |
| 203 | keine | 22(72) | 33,01(307) | 1,30 | 1, 2, 3 |
| 203 | gering | 22(72) | 17,20(160) | ---- | 0 |
| 203 | gering | 22(72) | 18,60(173) | ---- | 0 |
| 203 | gering | 22(72) | 20,65(192) | ---- | 0 |
| 203 | gering | 22(72) | 22,80(212) | ---- | 0 |
| 203 | gering | 22(72) | 24,73(230) | ---- | 0 |
| 203 | gering | 22(72) | 27,85(259) | ---- | 4 |
| 203 | keine | 54(130) | 17,20(160) | ---- | 0 |
| 203 | keine | 54(130) | 20,65(192) | ---- | 0 |
| 203 | keine | 54(130) | 22,58(210) | ---- | 0 |
| 203 | keine | 54(130) | 24,73(230) | ---- | 0 |
| 203 | keine | 54(130) | 30,86(287) | ---- | 0 |
| 203 | gering | 54(130) | 17,20(160 - -300) 32,26 | ----immer0 | |

0 = keine Abscheidung

1 = haftender Niederschlag

2 = abziehbar

3 = glänzender Kupferniederschlag

4 = nicht zusammenhängender, schlecht haftender Niederschlag

Die oben angeführten Versuchsergebnisse zeigten, dass eine direkte Elektrolyse der Ätzlösung möglich ist, dass man brauchbare Kupferniederschläge jedoch nur erreicht, wenn die Lösung nicht gerührt oder bewegt wird und bei Raumtemperatur gehalten wird.

Im Hinblick auf die praktische Anwendung ist es jedoch wünschenswert, den nachteiligen Effekt einer geringen Bewegung zu verhindern, da diese wiederum für einen Konzentrationsausgleich wichtig ist. Dies gilt auch besonders für den gewünschten Regenerierungseffekt, bei dem verbrauchte, kupferreiche Lösung der Elektrolyse zugeführt wird und die kupferarme Lösung in das Ätzbad zurückgelangt. Ausserdem ist die Elektrolyse bei Raumtemperatur von Nachteil, da während der Elektrolyse bei der Anwendung der hohen Stromdichten entsprechende Wärmemengen entwickelt werden, die eine Kühlung erforderlich machen. Des weiteren muss man die Energie berücksichtigen, die beim Arbeiten bei Raumtemperatur zum Abkühlen der Ätzlösung von ca. 54°C auf Raumtemperatur und zum Wiedererwärmen auf Arbeitstemperatur nach der Kupferabscheidung aufzuwenden ist.

Beispiel 2

Bei länger dauernder Elektrolyse einer Probe bei Raumtemperatur und ohne Bewegung stellte man überraschenderweise mit abnehmendem Kupfergehalt eine ansteigende Gewichtszunahme des Kupferniederschlages fest, und man fand, dass die Abscheidungsrate bei einer etwas geringeren Stromdichte aufrechterhalten werden konnte. Nach dieser Beobachtung kann man möglicherweise eine niedrigere Kupferkonzentration anwenden mit dem weiteren Effekt, dass damit der natürliche Korrosionsangriff der Lösung wesentlich verringert wird. Daraufhin wurde der Korrosionsstrom bei verschiedenen Potentialen und bei verschiedenen Kupferkonzentrationen für die Ätzlösung eingehend untersucht.

Für diese Untersuchungen wurde ein Korrosions-Meßsystem, Modell 331-3, der Firma EG & G Princeton Applied Research benutzt. Das System umfasst ein Modul für potentiostatische und galvanostatische Messungen, einen Computer, eine passende Korrosionszelle und einen Linienschreiber für die Potentialhöhen-Analyse (Scanning).

Mit dem Gerät wurde das "Ruhepotential" gemessen; das ist das Potential einer Kupferfolie in der Lösung ohne Anwendung einer äusseren Spannung. Dazu wurde der Einfluss einer äusseren Spannung auf den Strom der Kathode beobachtet. Die "Ruhepotential"-Messungen bestätigten die Beobachtungen dahingehend, dass eine verringerte Kupferkonzentration zu einem verringerten Korrosionsangriff führt. Mit dem Instrument konnten wir auch bestätigen, dass bei höheren Temperaturen und bei Bewegung ein erhöhter Korrosionseffekt durch die Lösung besteht. Zur besseren Darstellung der Messergebnisse wurden daraus die Diagramme in den Fig. 1 - 5 erstellt. Sie zeigen die unterschiedlichen "Ruhepotentiale" in Abhängigkeit der Kupferkonzentration in ansonsten chemisch identischen Ätzlösungen. Ausserdem wurden Strom-Potential-Kurven aufgezeichnet.

Zur Darstellung der Stromdichten, die zur Verhinderung von Korrosion oder Ätzeffekt und Rücklösung des abgeschiedenen Kupfers erforderlich sind, wurden die von dem Instrument aufgezeichneten logarithmischen Stromwerte in Stromdichtewerte umgerechnet. Damit war ein Vergleich mit den experimentellen Ergebnissen möglich. Die Stromdichte wird in A/sq.ft. (Ampere pro Quadratfuss) bzw. A/dm$^2$ angegeben.

Aus den Fig. 1 - 5 wird deutlich, dass die Kathode mit einem ausgeprägten Gleichstrom überlagert werden muss, bevor eine Metallabscheidung einsetzen kann.

In den Kurven ist die Spannung und die zugehörige Stromdichte markiert, wie sie in der Elektrolysezelle für das Einsetzen einer Kupferabscheidung als erforderlich festgestellt wurde. Die Abscheidungsversuche zeigen, dass sich mit diesem Potential und dieser Stromdichte ein sichtbarer, haftfester Niederschlag bildet. In der Nähe dieses Potentials ist der Strom für die Metallabscheidung noch relativ gering; für bessere Stromausbeuten muss der Strom erhöht werden. Obwohl höhere Temperaturen und Elektrolytbewegung beide den Korrosionseffekt erhöhen, erlauben sie andererseits die Anwendung hoher Stromdichten und bessere Stromausbeuten. Um einen höheren Korrosionseffekt auszuschalten, wurden die weiteren Versuche mit wesentlich niedrigeren Kupferkonzentrationen in der Ätzlösung in dem Kathodenabteil gefahren.

Kurve A in Fig. 1 zeigt die Verhältnisse, wie in Beispiel 1 beschrieben, jedoch mit einer Kupferkonzentration von 180 g/l anstelle von 203 g/l in der Ätzlösung. Man fand, dass die Kupferabscheidung erst begann, wenn eine Stromdichte von 1559 A/dm$^2$ (145 A/sq.ft.) überschritten wurde bei einem Scanning-Potential von 800 mV, welches einem Potential von 7 V in der untersuchten Labor-Elektrolysezelle entspricht. Die mit dem Scanning-Potentiometer gefundenen Werte waren in ziemlich guter Übereinstimmung mit den praktischen Werten des Versuchs Nr. 1, und zeigten, dass ungefähr 6,45 kW/m$^2$ (0,6 kW/sq.ft.) erforderlich sind, damit eine brauchbare Kupferabscheidung einsetzt.

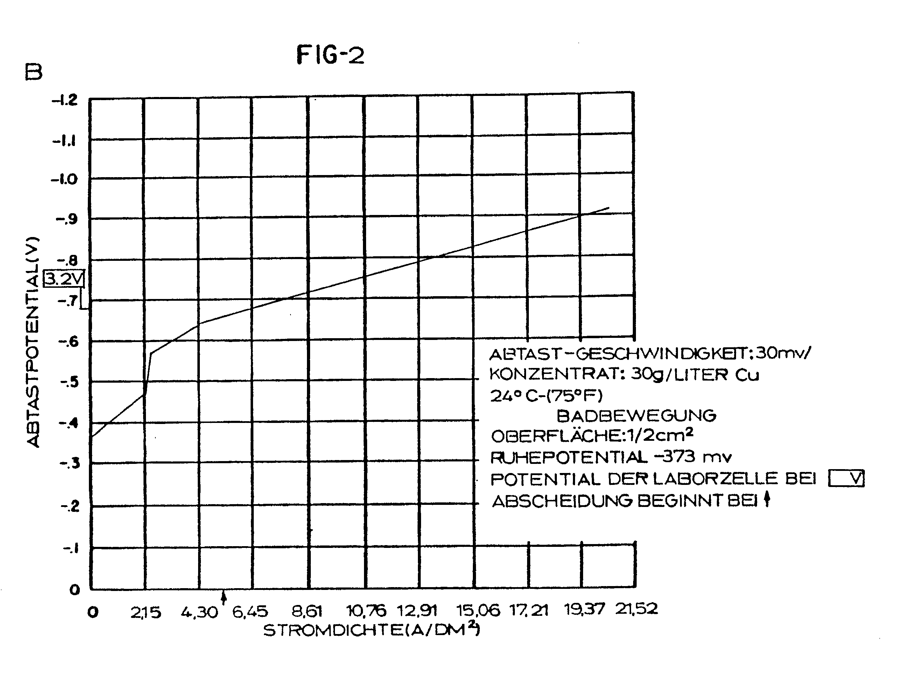

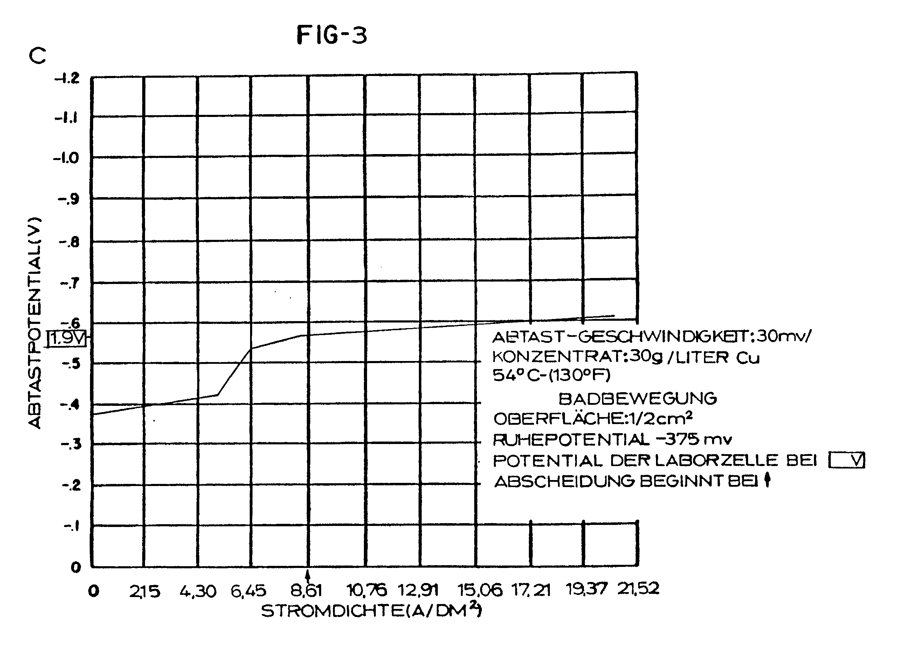

Die Kurven B und C in den Fig. 2 und 3 geben die gemessenen Bedingungen in einer Ätzlösung mit 30 g/l Kupfer bei Raumtemperatur und bei einer erhöhten Temperatur von 54°C wieder.

Das Ruhepotential ist deutlich negativer, der erforderliche Strom zur Unterdrückung des Korrosionsstromes und zur Einleitung der Kupferabscheidung ist wesentlich geringer.

Der Energiebedarf zur Abscheidung eines duktilen, abziehbaren Niederschlages war mit 1,61 kW/m$^2$ (0,15 kW/sq.ft.) deutlich geringer.

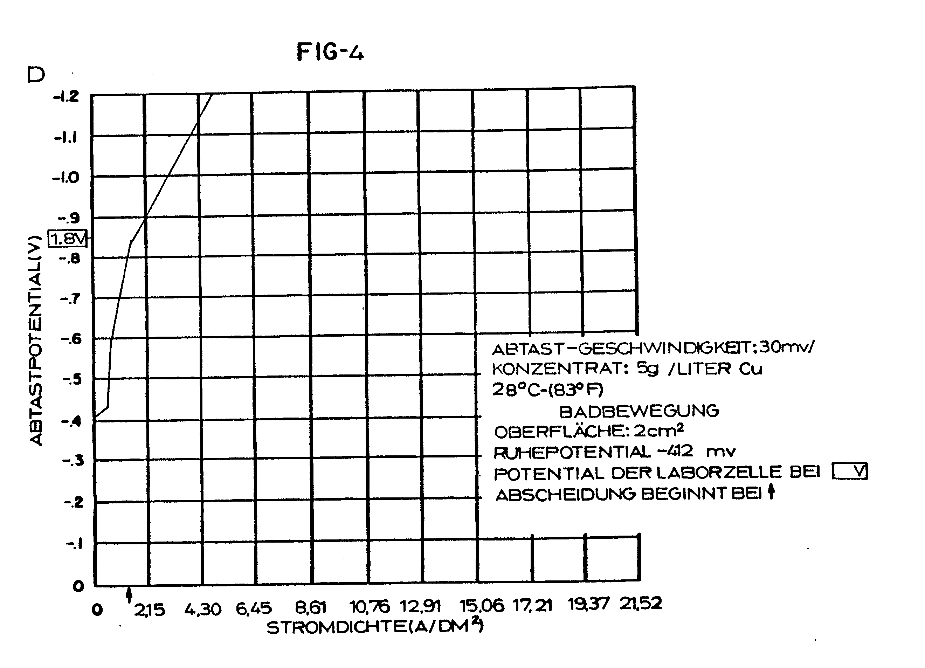

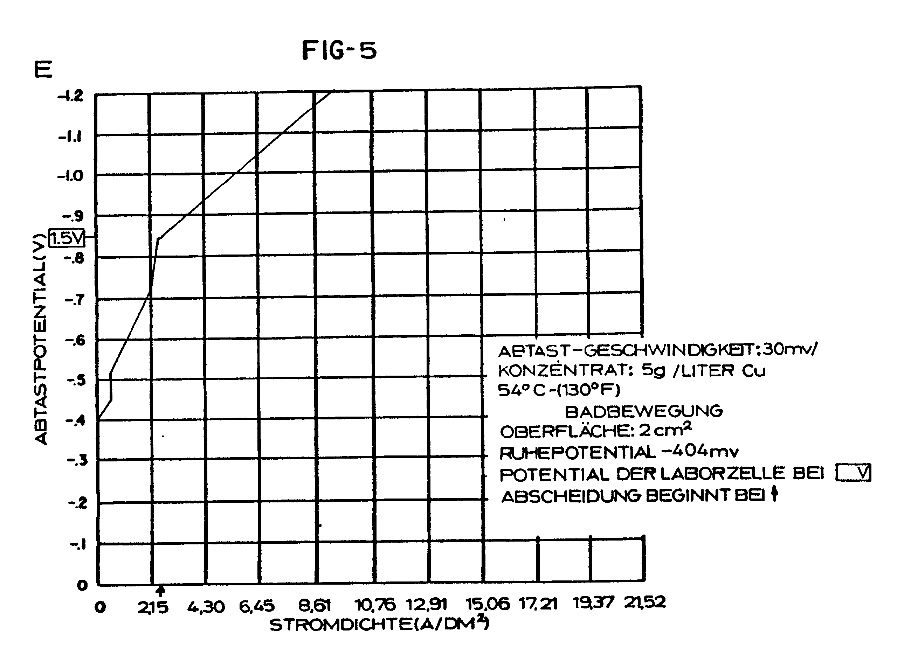

Kurven D und E der Fig. 4 und 5 zeigen die Bedingungen bei einer Ätzlösung mit 5 g/l Kupfer auf. Auch hier setzt sich der Trend eines niedrigeren Korrosionspotentials und einer niedrigeren Stromdichte zur Kupferabscheidung fort. In diesem Fall war der Energieaufwand zur Abscheidung einer abziehbaren Kupferschicht mit ca. 0,32 kW/m$^2$ (0,03 kW/sq.ft.) noch wesentlich geringer. Mit diesen Ergebnissen wurden die Versuche mit Ätzlösungen mit niedrigerem Kupfergehalt fortgesetzt, um zu prüfen, ob eine Übereinstimmung mit den bereits erfolgten Korrosionsuntersuchungen gegeben war. Die Korrosion wurde im Verhältnis zu dem normalen Korrosionsverhalten einer Kupferschicht in der Ätzlösung ohne äussere Gleichstromquelle und ohne Gegenstrom beurteilt.

Beispiel 3

Die Ergebnisse aus Beispiel 2 zeigen, dass man in Fortführung dieses Weges zu einer wirtschaftlicheren Abscheidung gelangt. Die weitere Verfahrensentwicklung konzentrierte sich daher darauf, mit verringerten Kupfergehalten zu arbeiten, wobei nur das Kupfer entfernt wird, ohne wesentliche Änderung der chemischen Zusammensetzung der Ätzlösung. Dies war für die weitere Verbesserung des Verfahrens von grosser Bedeutung. Die zweite Aufgabe bestand in der wirtschaftlichen Rückgewinnung des Kupfers in einer absolut wiederverwendbaren Form.

In Verfolgung der Zielsetzung wurden Versuche durchgeführt, die ähnlich der Versuchsreihe in Beispiel 1 waren, jedoch mit niedrigeren Kupferkonzentrationen. Es wurde ein Elektrolyt benutzt, der die gleiche chemische Zusammensetzung hatte wie die Ätzlösung, wobei das Kupfer durch verbrauchte Ätzlösung zugegeben wird. In der Praxis geschieht dies in der Weise, dass verbrauchte Ätzlösung dem Elektrolyten zugegeben wird, um die Kupferkonzentration aufrechtzuerhalten, und danach das gleiche Volumen an entkupferter Lösung in den Ätzprozess zurückgeführt wird. Nachfolgend die experimentellen Ergebnisse, die aufzeigen, dass mindestens 785 A/m² (73 A/sq.ft.) bei einer entsprechenden Kupferkonzentration erforderlich sind, um eine verwertbare Kupferabscheidung zu bekommen.

| Cu-gehalt | Bewegung | Temp. °C | Stromd. A/dm² (A/sq.ft.) | Volt V | kW/kg Cu | Bemerkungen |
|---|---|---|---|---|---|---|
| 1 | stark | 54 | 0,55 (5,21) | 0,5 | 0,59 | 4, 5 |
| 5 | stark | 54 | 7,92 (73,68) | 1,8 | 1,24 | 1, 2, 3 |
| 30 | stark | 54 | 20,16 (187,5) | 4,0 | 5,06 | 1, 2, 3 |
| 80 | stark | 54 | 22,58 (210) | 6,5 | 12,14 | 1, 2, 3 |

1 = haftender Niederschlag

2 = abziehbar

3 = glänzend

4 = pulvriger Niederschlag

5 = geringe Haftung

Die Ergebnisse zeigen, dass bei niedrigeren Kupferkonzentrationen andere Elektrolysebedingungen vorliegen und man bei bedeutend günstigeren Stromausbeuten das Kupfermetall wirtschaftlicher zurückgewinnen kann. Das bedeutet, dass bei mittleren Stromkosten von 0,05 US-Dollar pro kWh die Betriebskosten zur Rückgewinnung des Kupfers im Bereich von 0,062 US-Dollar pro kg (0,028 Dollar pro lb.) liegen, während Elektrolytkupfer zur Zeit bei 1,65 - 1,87 US-Dollar pro kg (0,75 - 0,85 Dollar pro lb.) liegt.

Beispiel 4

Während der ersten Versuche in der Pilotanlage liess sich ein ziemlich hoher Verlust an Ammoniak, welches bei starker Bewegung oder Rührung in die Atmosphäre entwich, beobachten. Ammoniakverluste treten ebenfalls auf, wenn zur Rückgewinnung des verschleppten Kupfers und der Chemikalien ein Verdunster oder Verdampfer zur Aufkonzentrierung des Spülwassers eingesetzt wird. Wie bereits vorher erwähnt, sind die Verschleppverluste in den Spülprozess relativ gross. Es wurden auch bereits die Kosten und das komplexe Problem der bisherigen Abwasserbehandlung besprochen. Die Abwasserbehandlungskosten und die Kosten für die verschleppten Chemikalien und das Kupfer können eingespart werden, wenn die Anlage für die Regenerierung der Ätzlösung auch für die Rückgewinnung der Verschleppverluste benutzt werden kann. Eine der einfachsten Methoden zur Aufkonzentrierung von Spülwässern für die Rückführung in das Prozessbad ist die Verdampfung bzw. Verdunstung, insbesondere, wenn man die Spülwassermenge unter Kontrolle hat. Die anfangs erwähnten Ammoniakverluste in der Rückgewinnungszelle werden durch den Verdampfungsprozess des Spülwassers noch wesentlich erhöht. Die der Erfindung vorgelagerten Versuche erstreckten sich deshalb ebenfalls auf eine Methode zur Verringerung oder Verhinderung der Ammoniakverluste. Die nachfolgend aufgelisteten Werte zeigen, dass eine Verringerung des pH-Wertes der Ätzlosung auf Werte unter 7,6 durch Zugabe von Salzsäure die Verdampfungsverluste des Ammoniaks nahezu vollkommen verhindert. Die Ätzlösung wurde auf 54°C gehalten und 2 Stunden lang mit Luft durchsprudelt; danach wurden die folgenden Ammoniakverluste in Abhängigkeit vom pH-Wert ermittelt:

$$pH\ 8,4 \qquad 1\ 210,0\ mg\ NH3/1$$
$$pH\ 8,0 \qquad 375,1\ mg\ NH3/1$$
$$pH\ 7,6 \qquad 65,3\ mg\ NH3/1$$
$$pH\ 7,0 \qquad 12,7\ mg\ NH3/1$$

Die geringe Zunahme des Chloridgehaltes aufgrund der pH-Änderung hat keinen nachteiligen Einfluss auf die Ätzlösung. Bei der Zugabe von Ammoniumhydroxid und Ammoniumchlorid zur Ätzlösung muss man lediglich einen etwas höheren Anteil von Ammoniumhydroxid im Verhältnis zum Ammoniumchlorid zugeben.

Beispiel 5

Es konnte ausserdem festgestellt werden, dass eine geringe Menge Ammoniumionen in das Anodenabteil wandert, obwohl das $NH4^+$ - Ion ein Kation ist und somit nicht aufgrund der Migration im elektrischen Feld dorthin wandern kann. Offensichtlich ist der Dialyse-Effekt für diese Verschiebung verantwortlich. Es liess sich aber feststellen, dass dieser Effekt durch Aufrechterhaltung einer Ammoniumkonzentration im Anolyten zwischen 2,5 und 20 g/l (Optimum 10 g/l) in Form eines Ammoniumsalzes, wie z.B. Ammoniumsulfat mit einer Konzentration von 20 - 80 g/l, ausgeglichen werden kann. Bekanntlich können aufgrund des Donnan-Effektes pH-Änderungen einen starken Einfluss auf den Ionen-Transport durch Ionenaustauschermembranen nehmen. Es ist daher wichtig, die chemische Zusammensetzung des Anolyten bei diesem elektrolytischen Regenerierungsverfahren unter Kontrolle zu haben, damit die Ätzlösung kontinuierlich wiederverwendet werden kann.

Ein Ausführungsbeispiel für das erfindungsgemässe Verfahren und eine Anlage zu seiner Durchführung sind nachfolgend anhand des in

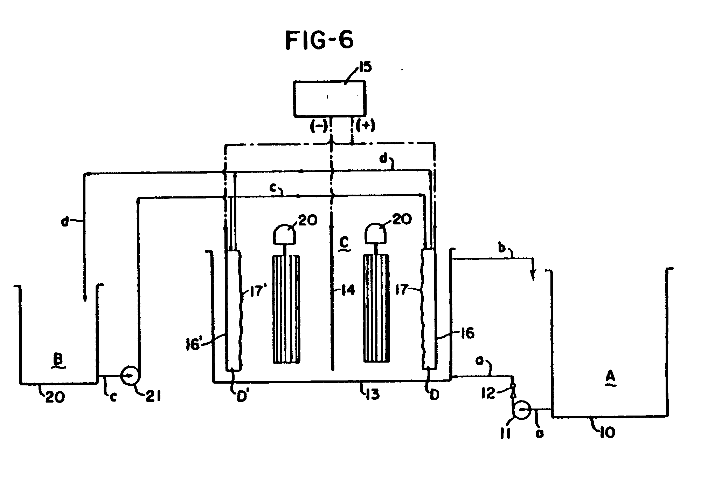

Fig. 6 dargestellten Verfahrensschemas
beschrieben.

Das Kathodenabteil C der Elektrolysezelle 13 enthält eine ammoniakalische Ätzlösung, die anfangs einer neuen Ätzlösung mit keinem oder wenig Kupfergehalt entspricht. In dem Behälter 20 wird ein ammoniumhaltiger Anolyt angesetzt, den man durch Auflösen eines Ammoniumsalzes, wie zB. Ammoniumsulfat, Ammoniumchlorid, Ammoniumacetat oder Ammoniumsulfamat, und pH-Einstellung mit Ammoniumhydroxid oder Salzsäure auf einen pH-Wert von 4,0 - 10,0 und einer Ammoniumkonzentration von 1,5 - 20 g/l erhält. Der optimale pH-Wert liegt bei 7,5. Der so angesetzte Anolyt wird in die Anodenabteile 17 und 17' der Elektrolysezelle 13 über die Rohrleitung 'c' und die Dosierpumpe 21 gefüllt, wobei er im Kreislauf über die Rohrleitung 'd' in den Behälter 20 zurückgelangt, wo pH und Ammoniumgehalt kontrolliert werden.

Um die Anlage in Betrieb zu setzen, wird die Dosierpumpe 11 eingeschaltet, die erschöpfte, kupferhaltige Ätzlösung A aus dem Behälter 10 über ein Rückschlagventil 12 in den Bereich des Bodens oder das Ende des Kathodenabteils C der Elektrolysezelle 13 fördert. Das Kathodenabteil C soll eine zentral angeordnete Kathode 14 aus einem brauchbaren Metall enthalten, wie z.B. aus Eisen, nichtrostendem Stahl oder Kupfer, mit vorzugsweise ebener Oberfläche, auf der das Kupfer in Form einer Platte oder Folie abgeschieden wird und von welcher das reine Kupfer von Zeit zu Zeit abgeschält werden kann.

Um die Lösung in dem Kathodenabteil C auf gleichmässiger Kupferkonzentration und in einem bestimmten pH-Bereich zu halten, befinden sich die beiden elektrisch angetriebenen Rührer 22, voneinander versetzt, auf beiden Seiten der Kathode 14 in dem Kathodenabteil.

Es kann sich dabei um herkömmliche Rührwerke mit abgekapseltem Motor handeln. Wie bereits oben angeführt, werden Kathodenabteil C und die Anodenabteile D und D' mit ammoniakalischen Lösungen befüllt, danach wird die gebrauchte, kupferhaltige ammoniakalische Ätzlösung A aus dem Ätzprozess über einen Sumpftank oder Behälter 10 dem Kathodenabteil C zugegeben. Jedes der Anodenabteile D und D' enthält eine brauchbare Anode aus unlöslichem Metall, wie z.B. Blei, nichtrostendem Stahl, platiniertem Titan oder Niob. Die Zelle 13 ist, wie gezeigt, mit kationendurchlässigen Membranen 17 und 17' ausgerüstet, die den Katholyten in Abteil C von den Anolyten in D und D' trennen. Die Anodenabteile D und D' umschliessen die Anoden 16 und 16' ganz, bis auf die Membranseiten.

Der Prozess wird durch die Einschaltung eines Gleichstromkreises über die Elektroden 14, 16 und 16' in Gang gesetzt, wobei zunächst das Ruhepotential der Zelle 13 überwunden werden muss, und danach, mit Zuführung der erschöpften, kupferreichen Ätzlösung die Kupferabscheidung einsetzt. Um Ammoniakverluste durch Verdampfung zu vermeiden, wird die dem Kathodenabteil C zugeführte kupferreiche Lösung auf einen pH-Wert von weniger als 8,0 (Optimum pH 7,6) durch Zudosierung einer entsprechenden Säure, z.B. Salzsäure, eingestellt. Wie im Beispiel 4 bereits diskutiert, verhindert die Einstellung eines niedrigeren pH-Wertes die Ammoniakverluste aus der aufzubereitenden Lösung.

Membranen 17 und 17' verhindern ebenfalls Chlorid-, Nitrat- oder andere Ammoniumsalzverluste aus der zu behandelnden Ätzlösung aus dem Kathodenabteil C in die Anodenabteile D und D'. Der Ammoniumgehalt von 1,5 - 20 g/l und ein pH-Wert von 4,0 - 10,0 in dem Anolyten verhindern die Abwanderung von Ammoniumionen aus dem Katholyten in den Anolyten.

Die semipermeablen Membranen 17 und 17' verhindern nicht nur den Verlust von Ammoniumionen aus dem Kathodenabteil, sie verhindern ausserdem das Eindringen von Chlorid in den Anolyten, bzw. von Nitrat im Falle einer nitrathaltigen, ammoniakalischen Ätzlösung. Das bedeutet, dass der gewünschte Gehalt an Chemikalien in der Ätzlösung aufrechterhalten bleibt, während das angereicherte, gelöste Kupfer entfernt und zurückgewonnen wird. Die Entfernung des Kupfers aus der Ätzlösung erfolgt ohne die Bildung von Kolloiden, von schlammartigen Kupferausfällungen oder Metallpulver in fester, metallischer Form auf der Kathode 14.

Wie in den vorangehenden Versuchen erklärt, ist es wichtig, dass die Abscheidung in der Elektrolysezelle 13 unter Vermeidung der der Lösung eigenen elektrochemischen Korrosion durchgeführt wird. Diese wird durch das Ruhepotential von Kupfer in der Lösung ausgedrückt und ist bei Bewegung und erhöhter Temperatur entsprechend grösser. Dazu wird ein entsprechendes Abscheidungspotential von dem Gleichrichter 15 geliefert, wobei ein bevorzugter Arbeitsbereich von 0,5 - 10 Volt, optimal 2,0 - 3,5 Volt, einzuhalten ist.

Unter Verwendung einer Anlage nach dem Schema der Fig. 6 wird die ammoniakalische Ätzlösung A bei Erreichen einer Konzentration von 180 - 200 g/l Kupfer kontinuierlich aus einer Pumpenvorlage oder einem Behälter 10 mit Hilfe einer Dosierpumpe 11 in den Bodenbereich oder das Ende des Kathodenabteiles C der Elektrolysezelle 13 gefördert. Durch die anfangs kupferfreie oder kupferarme Lösung in dem Kathodenabteil C und die mit Hilfe der Dosierpumpe 11 kontrollierte Zugabe der kupferreichen, erschöpften Ätzlösung A wird der Kupfergehalt durch die elektrolytische Abscheidung auf der Kathode 14 im Bereich von weniger als 80 g/l gehalten. Damit wird ein kontinuierliches Regenerieren der Ätzlösung möglich, wobei die Dosierpumpe 11 neue Lösung zuführt, während die regenerierte, kupferarme Lösung vom oberen Bereich oder Spiegel der Zelle 13 über die Rohrleitung 'b' zurückfliesst. Der Rücklauf entspricht der Zuflussmenge an zu regenerierender, kupferreicher Ätzlösung über Rohrleitung 'a'.

In der Elektrolysezelle 13 wir der Kupfergehalt von 180 - 200 g/l auf 80 g/l oder weniger in einem kontinuierlichen Umlauf verringert. Nach der Verringerung des Kupfergehaltes in der ammoniakalischen Ätzlösung kann diese direkt wieder, ohne weitere Behandlung, dem Ätzprozess zugeführt werden.

Der pH-Wert der Lösung, der bei der Regeneration bei ca. pH 8 liegt, wird jedoch vor der Rückführung in das Ätzbad wieder, z.B. mit Ammoniumhydroxid, angehoben. Da der Gehalt an Ammoniumchlorid, -nitrat, oder anderer Ammonium-Ätz-Salze erhalten bleibt, erfordert die rekonditionierte Ätzlösung nur von Zeit zu Zeit geringe Ergänzungen oder Korrekturen.

Von wesentlicher Bedeutung für das Verfahren zur Behandlung der kupferreichen Ätzlösung oder des Spülwassers in dem Kathodenabteil C der Elektrolysezelle 13 ist die Trennung der Anodenabteile D und D' durch die Membrane. Rekonditionierte Lösung gelangt kontinuierlich in freiem Gefälle von einem oberen Bereich des Kathodenabteiles C in einen Auffangbehälter, wo der pH-Wert der Lösung, z.B. durch Zugabe von Ammoniumhydroxid, wieder auf einen Wert von über 8,0 eingestellt wird und eventuell erforderliche Zugaben von Ammoniumverbindungen zur Ergänzung von Verlusten während des Ätzprozesses gemacht werden können.

Wenn der Kupfereintrag durch den Ätzprozess und der Austrag von Kupfer durch die Elektrolyse sich ausgleichen, ist der Prozess im Gleichgewicht und kann kontinuierlich betrieben werden. Darüber hinaus kann ein solcher kontinuierlicher Prozess auch mit der gleichen Wirksamkeit in einer quasi diskontinuierlichen Weise betrieben werden, indem die Zugabe der erschöpften Ätzlösung und der Abzug der rekonditionierten Lösung periodisch erfolgen oder die Regeneration der Ätzlösung nicht direkt mit der Ätzanlage verbunden ist.

## EP 0 158 910 B1

**Patentansprüche**

1. Verfahren zur Rückgewinnung von Kupfer aus einer ammoniakalischen Kupfer-Ätzlösung, bei dem verbrauchte, kupferreiche, ammoniakalische Ätzlösung dar Elektrolyse unter Verwendung einer Elektrolysezelle mit einer die Kathoden- und Anodenabteile voneinander trennenden, kationendurchlässigen Membrane zugeführt und kupferarme, rekonditionierte Ätzlösung zur Wiederverwendung in das Ätzbad zurückgeführt wird,

   **dadurch gekennzeichnet,**

   dass:
   a) bei Einleitung des Verfahrens mittels eines Gleichstroms mit einer Spannung von 0,5 - 10 V das Ruhepotential der Elektrolysezelle überwunden wird,
   b) erschöpfte, ammoniakalische Lösung bei Überschreiten einer Kupferkonzentration von 80 - 200 g/l dem Kathodenabteil zudosiert wird,
   c) dar pH-Wert des Katholyten unter 8 gehalten wird,
   d) die Ammoniumkonzentration des Anolyten im Anodenabteil im Bereich von 1,5 - 20 g/l und sein pH-Wert auf 4 - 10.0 eingestellt wird,
   e) die rekonditionierte ammoniakalische Ätzlösung bei Unterschreitung eines Kupfergehalts von 80 - 5 g/l aus dem Kathodenabteil abgezogen wird, wobei
   f) die Stromdichte während des Prozesses auf 7,85 - 23 A/dm$^2$ eingestellt wird,
   wobei durch Einhaltung der genannten Parameter a) bis f) eine Bildung von Metall verbindungen oder pulverförmiger Abscheidung vermieden wird und die Abscheidung des metallisch reinen Kupfers in Form von Platten oder Folien erfolgt.

2. Verfahren nach Anspruch 1, dadurch gekennzeichnet, dass die verbrauchte kupferhaltige, ammoniakalische Ätzlösung kontinuierlich dem Kathodenabteil zugeführt und regeneriert zurückgeführt wird, wobei Kupfer auf der Kathode während des Durchlaufs abgeschieden wird.

3. Verfahren nach Anspruch 1 oder 2, dadurch gekennzeichnet, dass die verbrauchte, kupferhaltige Ätzlösung in den unteren Bereich des Kathodenabteils zudosiert und rekonditionierte, wiedereinsetzbare ammoniakalische Ätzlösung aus dessen oberen Bereich in den Ätzprozess zurückgeführt wird.

4. Verfahren nach einem der vorhergehenden Ansprüche, dadurch gekennzeichnet, dass dem Anolyten ein Ammnoniumsalz, wie z.B. Ammoniumsulfat, -chlorid, -acetat, -sulfamat oder -phosphat, zugesetzt wird, um eine Ammoniumkonzentration im Bereich von 1,5 - 20 g/l bei einem pH-Wert von 4,0 - 10,0 aufrechtzuerhalten.

5. Verfahren nach einem der vorhergehenden Ansprüche, dadurch gekennzeichnet, dass die Ammoniumkonzentration 1,5 - 20 g/l und der pH-Wert 7.5 beträgt.

6. Verfahren nach Anspruch 1, dadurch gekennzeichnet, dass der pH-Wert der aufbereiteten, vom Kathodenabteil ablaufenden kupferarmen Lösung auf einen pH-Wert über 8,0 erhöht wird, bevor die Lösung in dem Kupfer-Ätzbad wiederverwendet wird.

7. Verfahren nach einem der vorhergehenden Ansprüche, dadurch gekennzeichnet, dass der pH-Wert der Lösung in dem Kathodenabteil auf einem Wert von weniger als 7,6 gehalten wird, um Verdampfungsverluste von Ammoniak aus der Lösung zu verhindern.

8. Verfahren nach einem der vorhergehenden Ansprüche, dadurch gekennzeichnet, dass im Anolyten eine Konzentration eines Ammoniumsalzes von 2,15 - 20 g/l vorzugsweise 10 g/l aufrechterhalten wird.

9. Verfahren nach einem der vorhergehenden Ansprüche, dadurch gekennzeichnet, dass die Lösung in dem Kathodenabteil bewegt und auf einer Temperatur von ca. 54° C oder darunter gehalten wird und die Zudosierung der erschöpften Ätzlösung sowie die elektrolytische Kupferabscheidung so eingestellt werden, dass der Kupfergehalt in der regenerierten Ätzlösung unter 20 g/l liegt.

10. Verfahren nach einem der vorhergehenden Ansprüche, dadurch gekennzeichnet, dass die verbrauchte kupferhaltige ammoniakalische Ätzlösung dem Kathodenabteil diskontinuierlich zugeführt und nach Regenerierung diskontinuierlich abgezogen wird.

11. Verfahren nach einem der vorhergehenden Ansprüche, dadurch gekennzeichnet, dass für den Elektrolyseprozess 0,65 - 12,13 kWh pro kg abgeschiedenes Kupfer aufgewendet werden.

**Claims**

1. A process of recovering copper from an ammoniacal copper etching solution comprising the steps of subjecting spent, ammoniacal etching solution with a high copper content to electrolysis using an electrolytic cell with a diaphragm which is permeable to cations and which separates the cathode and the anode compartments one from the other, and returning to the etching bath etching solution with a low copper content for repeated use,

   **wherein**
   a) the quiescent potential of the electrolytic cell is overcome during the initial phase of the process by means of a direct current of 0.5 to 10 V,
   b) spent, ammoniacal solution is fed in a controlled manner into the cathode compartment when a copper concentration of 80 to 200 g/l is exceeded,
   c) the pH of the catholyte is maintained below 8,
   d) the ammonium concentration of the anolyte in the anode compartment is maintained within a range of 1.5 to 20 g/l, and its pH is maintained within 4 to 10.0,
   e) the reconditioned ammoniacal etching solution is removed from the cathode compartment when the copper content drops below 80 to 5 g/l, while
   f) the current density is maintained within the range of 7.85 to 23 A/dm$^2$ during the process,
   the observation of the above parameters a) to f) preventing the formation of metal compounds or precipitations in powder form and resulting instead in plating-out of the copper as pure metal in the form of slabs or films.

2. A process according to claim 1, wherein the spent ammoniacal copper etching solution is introduced continuously into the cathode compartment and returned in a regenerated state, and copper is plated-out upon the cathode during that cycle

3. A process according to claim 1 or 2, wherein the spent, copper etching solution is fed in a controlled manner into the lower area of the cathode compartment, and reconditioned, reusable ammoniacal etching solution from the upper area of the cathode compartment is returned to the etching process.

4. A process according to any of the preceding claims, wherein an ammonium salt, such as an ammonium sulfate, chloride, acetate, sulfamate or phosphate, is added to the electrolyte in order to maintain the ammonium concentration within a range of 1.5 to 20 g/l, at a pH of 4.0 to 10.0.

5. A process according to any of the preceding claims, wherein the ammonium concentration is between 1.5 to 20 g/l and the pH is 7.5.

6. A process according to claim 1, wherein before returning the solution to the copper etching bath, the pH of the reconditioned low-copper solution issuing from the cathode compartment is increased to a pH above 1.0.

7. A process according to any of the preceding claims, wherein the pH of the solution in the cathode compartment is maintained at a value of below 7.6 in order to prevent any ammonium losses of the solution due to evaporation.

8. A process according to any of the preceding claims, wherein a concentration of an ammonium salt of 2.5 to 20 g/l, preferably 10 g/l is maintained in the electrolyte.

9. A process according to any of the preceding claims, wherein the solution is agitated in the cathode compartment and maintained at a temperature of approx. 54° C or below, and the addition of the spent etching solution and the electrolytic copper precipitation are adjusted in such a manner that the copper

13

content in the reconditioned etching solution is below 20 g/l.

10. A process according tc any of the preceding claims, wherein the spent ammoniacal copper etching solution is introduced into the cathode compartment discontinuously, and removed discontinuously after reconditioning.

11. A process according to any of the preceding claims, wherein 0.65 to 12.13 kWh per Kg of plated-out copper are spent on the electrolytic process.

**Revendications**

1. Procédé de récupération de cuivre à partir d'une solution corrosive ammoniaquée contenant du cuivre, dans lequel la solution épuisée est traitée par électrolyse dans une cellule d'électrolyse en utilisant une membrane perméable aux cations séparant l'anode et la cathode, la solution reconditionnée, apauvrie en cuivre étant recyclée vers le bain d'attaque pour réutilisation,

caractérisé en ce que :
a) lors du démarrage du procédé le potentiel de repos de la cellule d'électrolyse est dominé par un courant continu d'une tension comprise entre 0,5 et 10 V,
b) la solution ammoniaquée épuisée est dirigée de façon dosée sur le compartiment cathodique quand elle dépasse une concentration en cuivre comprise entre 80 et 200 g/l,
c) la valeur pH du catholyte est maintenue à 8,
d) la concentration d'ammonium de l'anolyte du compartiment anodé est réglée entre 1,5 et 20 g/l et son pH entre 4 et 10,
e) la solution corrosive reconditionnée est retirée du compartiment cathodique quand sa teneur de cuivre est tombée de 80 à 5 g/l,
f) la densité du courant durant le traitement est fixée entre 7,85 et 23 A/dm$^2$,
ainsi en respectant les paramètres a) à f) on évite la formation de métaux à l'état combiné ou de dépôts pulvérulents et le dépôt du cuivre à l'état pur se fait en plaques ou en feuilles.

2. Procédé selon revendication 1, caractérisé par le fait que la solution corrosive ammoniaquée épuisée riche en cuivre est amenée continuellement au compartiment cathodique et elle est recyclée étant régénérée en déposant du cuivre sur la cathode pendant son passage.

3. Procédé selon revendication 1 ou 2, caractérisé par le fait que la solution corrosive épuisée riche en cuivre est conduite de façon dosée dans le compartiment bas de la cathode et que la solution ammoniaquée reconditionnée et réutilisable est recylclée à partir de la partie supérieure du compartiment vers le processus d'attaque.

4. Procédé selon une des revendications précédentes, caractérisé par le fait qu'à l'anolyte on ajoute un sel d'ammonium, comme par exemple un sulfate, chlorure, acétate, sulfamate, ou un phosphate d'ammonium afin de garder une concentration en ammonium dans les limites de 1,5 à 20 g/l avec une valeur du pH de 4 à 10.

5. Procédé selon une des revendications citées ci-dessus, caractérisé par le fait que la concentration d'ammonium est comprise entre 1,5 et 20 g/l et que la valeur du pH est de 7,5.

6. Procédé selon la revendication 1, caractérisé par le fait que le pH de la solution pauvre en cuivre traitée qui s'écoule depuis le compartiment cathodique est portée à une valeur supérieure à 8,0 avant de revenir dans le bain d'attaque.

7. Procédé selon une des revendications ci-dessus, caractérisé par le fait que le pH de la solution est maintenue inférieure à 7,6 dans le compartiment cathodique afin d'éviter des pertes d'ammoniaque par évaporation.

8. Procédé selon une des revendications ci-dessus, caractérisé par le fait que l'on maintient dans l'anolyte une concentration en sel d'ammonium de 2,5 à 20 g/l et de préférence de 10 g/l.

9. Procédé selon une des revendications ci-dessus, caractérisé par le fait que la solution véhiculée dans le compartiment cathodique est maintenue à une température d'environ 54° C, ou en dessous, et que le dosage de la solution épuisée ainsi que celui du dépôt de cuivre électrolytique est réglé de façon que la teneur en cuivre de la solution régénérée soit inférieure à 20 g/l.

10. Procédé selon une des revendications ci-dessus, caractérisé par le fait que la solution ammoniaquée épuisée riche en cuivre est amenée dans le compartiment cathodique de façon discontinue et en est retirée de façon discontinue après régénération.

11. Procédé selon une des revendications ci-dessus, caractérisé par le fait que dans le processus d'électrolyse on utilise 0,65 à 12,13 kWh par kg de cuivre séparé.

FIG-1

A

ABTAST-GESCHWINDIGKEIT:30mv/MIN.
KONZENTRAT:180g/LITER Cu
24°C-(75°F)
KEINE BADBEWEGUNG
OBERFLÄCHE:1/2cm²
RUHEPOTENTIAL -199 mv
POTENTIAL DER LABORZELLE BEI [ V ]
ABSCHEIDUNG BEGINNT BEI ↑

STROMDICHTE(A/DM²)

## FIG-2

B

ABTASTPOTENTIAL(V)

-1.2
-1.1
-1.0
-.9
-.8
3.2V -.7
-.6
-.5
-.4
-.3
-.2
-.1
0

0  2,15  4,30  6,45  8,61  10,76  12,91  15,06  17,21  19,37  21,52

STROMDICHTE(A/DM²)

ABTAST-GESCHWINDIGKEIT:30mv/
KONZENTRAT: 30g/LITER Cu
24°C-(75°F)
          BADBEWEGUNG
OBERFLÄCHE:1/2cm²
RUHEPOTENTIAL -373 mv
POTENTIAL DER LABORZELLE BEI ⬜V⬜
ABSCHEIDUNG BEGINNT BEI ⬆

EP 0 158 910 B1

FIG-3

ABTAST-GESCHWINDIGKEIT:30mv/
KONZENTRAT:30g/LITER Cu
54°C-(130°F)
      BADBEWEGUNG
OBERFLÄCHE:1/2cm²
RUHEPOTENTIAL −375 mv
POTENTIAL DER LABORZELLE BEI ▯ V
ABSCHEIDUNG BEGINNT BEI ♦

EP 0 158 910 B1

FIG-4

# FIG-5

ABTAST-GESCHWINDIGKEIT:30mv/
KONZENTRAT: 5g /LITER Cu
54°C -(130°F)
BADBEWEGUNG
OBERFLÄCHE: 2 cm²
RUHEPOTENTIAL -404mv
POTENTIAL DER LABORZELLE BEI [ V ]
ABSCHEIDUNG BEGINNT BEI ↑

EP 0 158 910 B1

FIG-6